# EUROPÄISCHE PATENTSCHRIFT

(11) **EP 1 197 541 B1**
(45) Veröffentlichungstag und Bekanntmachung des Hinweises auf die Patenterteilung: **28.01.2004**
(21) Anmeldenummer: 01120060.7
(22) Anmeldetag: 21.08.2001
(51) Int. Cl.: C09J 177/00, D06M 17/04

(54) **Vernetzende Basisschicht für Fixiereinlagen nach dem Doppelpunkt- und Pastenverfahren**
Raster-like coating of hot melt adhesive
Enduit réticulaire d'adhésifs pour collage à chaud

(30) Priorität: 11.10.2000 DE 10050231
(43) Veröffentlichungstag der Anmeldung: 17.04.2002
(73) Patentinhaber: Degussa AG, 40474 Düsseldorf (DE)
(72) Erfinder: Simon, Ulrich, 44625 Herne (DE); Köhler, Günther, Dr., 45770 Marl (DE)

(56) Entgegenhaltungen:
- EP-A- 0 940 461
- DE-A- 19 821 355
- US-A- 5 264 515

## Beschreibung

Die Erfindung betrifft ein Verfahren zur Herstellung einer mikroverkapselten vemetzbaren Schmelzkleberbeschichtung auf Basis einer wäßrigen Paste bestehend aus einer mikroverkapselten Polyisocyanat-Dispersion und einem handelsüblichen, aminterminierten Copolyamid oder Copolyester zur Herstellung eines Basispunktes als Rückschlagsperre bei der Doppelpunktbeschichtung. Der Oberpunkt besteht aus einem amingeregelten Copolyamid, um eine gute Anbindung an den Unterpunkt zu gewährleisten. Insbesondere betrifft die Erfindung eine Schmelzklebermasse zum rasterförmigen Beschichten von fixierbaren Einlagestoffen für die Bekleidungsindustrie, speziell Oberbekleidung. Statt des Copolyamids können auch OH-Gruppen terminierte Copolyester auf Basis Terephthalsäure, Isophthalsäure und Butandiol oder Butandiol in Kombination mit kleinen Mengen von bis zu 12 Mol%, vorzugsweise von 6 bis 10 Mol%, anderer Diole wie z.B. Hexandiol oder Polyethylenglykol, mit Schmelzpunkten von 100 bis 150 °C, eingesetzt werden.

Um die Probleme hinsichtlich der reduzierten Wasch- und Reinigungsbeständigkeit sowie hinsichtlich der schwächeren Haftung zu lösen, sind verbesserte Schmelzklebermassen, aber auch verbesserte Beschichtungstechnologien entwickelt worden Duo- oder Doppelpunktbeschichtungen sind z.B. in den Patenten DE-B 22 14 236, DE-B 22 31 723, DE-B 25 36 911 und DE-B 32 30 579 beschrieben.

**EP-A-940461** beschreibt eine Klebeschicht auf Stoff aus Kopolyamiden und gekapselten Isocyanaten, die beim Schmelzen vernetzen. Zur Einkapselung wird ataktisches Polypropylen und kein silanisiertes Polybutadien verwendet

**US-A-5264515** offenbart einen eingekapselten Vernetzer, die Vernetzung erfolgt under Druck und Temperatur aufgrund eines Bruchs der Verkapselung. Polybutadien als Kapsel wird erwähnt, aber keine Silanisierung

**DE-A-19821355** offenbart das erfindungsgemäße silanisierte Polybutadien, aber keine Einkapselung eines Vernetzers

Die Beschichtungsträger wurden nach dem Stand der Technik auch dadurch verbessert, daß feinere Garne mit feintitrigen Einzelfasern bis hin zum Mikrofaserbereich sowie Synthetikgarne, beispielsweise Hochbauschacryl- oder Polyestergarne, verwendet werden. Die ursprünglich verwendeten Gewebe sind weitgehend durch Webwirk- und Wirkvliese ersetzt worden, wobei die zuletzt genannten Stoffe eine Kombination aus Vliesen mit Wirkwaren darstellen. Diese neuen Kombinationen führen zu sehr weichen aber auch sehr offenen Konstruktionen, die noch höhere Anforderungen an die Beschichtungsmethoden und Schmelzklebermassen stellen, besonders hinsichtlich Rückschlag und Durchschlag der Schmelzklebermasse.

Kosten und Qualitätsgründe haben dazu geführt, daß die Beschichtungsmenge, die pro m² Einlagenstoff aufgebracht wird, deutlich reduziert wurde. Während früher Auftragsmengen von 15 bis 20 g/m² üblich waren, liegen diese heute bei 7 bis 12 g/m².

Trotz dieser kleinen Mengen muß eine ausreichende Haftung und Beständigkeit gewährleistet sein, d.h., daß der Schmelzkleber nicht in die Einlage eindringen darf, denn dann steht er zur eigentlichen Verklebung nicht mehr zur Verfügung.

Der Erfindung lag daher die Aufgabe zugrunde, eine wirkungsvolle Rückschlagsperre zu finden, die bei verminderter Beschichtungsmenge eine hohe Haftfestigkeit, eine gute Anbindung des Oberpunktes an die Basisschicht und eine gute Wasch- und Reinigungsbeständigkeit und Sterilisierbarkeit aufweist. Ein weiterer Vorteil erwächst durch Erzielung deutlich höherer Wärmestandfestigkeiten.

Nach dem Stand der Technik sind eine Reihe von Rückschlagsperren bekannt, wie z.B. vernetzende Acrylat- oder Polyurethandispersionen oder pulvergefüllte Pasten auf Basis hochschmelzender Copolyamide und Polyethylen oder hochviskoser thermoplastischer Polyurethanpulver.

All diese Systeme haben mehr oder weniger große Nachteile bei der Applikation beim Einsatz auf rauhen, haarigen Einlagen und bei der Anbindung an den Oberpunkt oder Beständigkeit gegen Wäsche.

Bei der Beschichtung selbstvernetzender Acrylat- oder Polyurethandispersionen kommt es oft schon während der Beschichtung zu teilweiser Vernetzung, was zu Schablonenbelag und damit Verstopfung der Schablonenlöcher führen kann.

Aufwendiges Reinigen der Anlage ist notwendig. Zu großen Schwierigkeiten und Störungen bis zur Unbrauchbarkeit der Schablonen kommt es außerdem, wenn produktionsbedingter Stillstand eintritt. Auch ist bei Aufbringen des Materials die Anbindung des Oberpunktes an die Basisschicht ein Problem. Die hochviskosen pulvergefüllten Systeme auf Basis Polyamid, Polyethylen und Polyurethan erfüllen meist nicht die geforderte Rückschlagsicherheit.

Bisher ist es nicht gelungen, ein stabiles vernetzbares System für den Basispunkt zu schaffen. Entweder konnten die vorzugsweise einsetzbaren Isocyanate nicht gegen Wasser stabilisiert werden (Matrix für Beschichtungspasten) oder die Aktivierungstemperaturen für die Vernetzung (größer 150 °C) waren zu hoch.

Für spezielle Anwendungen, wo die Aktivierungstemperatur höher sein kann (>150°C) z.B. für Hemdkragenfixierung können auch intern blockierte Polyisocyanate, z.B. dimerisierte Polyisocyanate, eingesetzt werden. Pulvermischungen aus diesem Polyisocyanat und der aminterminierten Copolyamide oder Copolyester können auch über andere Applikationstechniken wie Pulverstreuen oder Pulverpunkt, verarbeitet werden. Für die Hemdkragenfixierung werden nach dem Stand der Technik bisher Polyethylen mit Schmelzpunkten von 110 °C bis 120 °C oder höherschmelzende Polyamide im Schmelzbereich von 130 °C bis 160 °C eingesetzt.

Das Isocyanat mußte gegen Wasser oder gegen Diffusion vor Luftfeuchtigkeit stabilisiert werden, um bei relativ niedrigen Temperaturen die Aktivierbarkeit zu gewährleisten.

Aufgabe der Erfindung war es, eine wirkungsvolle Rückschlagsperre zu finden, die bei verminderter Beschichtungsmenge eine hohe Haftfestigkeit, eine gute Anbindung des Oberpunktes an die Basisschicht auch auf rauhen Unterlagen und eine gute Wasch- und Reinigungsbeständigkeit sowie Sterilisierbarkeit aufweist. Eine weitere Aufgabe war es, höhere Wärmestandfestigkeiten der Schmelzkleberbeschichtung zu erzielen und die Verarbeitung der Dispersionen zu erleichtern sowie Verstopfungen an den Schablonen zu vermeiden. Darüber hinaus war es Aufgabe der Erfindung, die Empfindlichkeit des Isocynates gegenüber Luftfeuchtigkeit deutlich zu verbessern.

Die Aufgabe wurde gemäß der Patentanspüche dadurch gelöst, daß das Isocyanat mit mehr als 2 freien NCO-Gruppen und einem Schmelzbereich von 110 bis 130 °C, z.B. trimerisierte Polyisocyanatprodukte, in mikroverkapselter Form in die Pastenformulierung eingefügt wurde.

Als Kapselmaterial eignet sich silanisiertes Polybutadien, das bei Kontakt mit Wasser oder wasserfeuchter Dampfatmosphäre stabile und wasserundurchlässige Kapseln bildet. Es ist zwar bekannt, daß silanisierte Polybutadiene zur Mikroverkapselung eingesetzt werden können, jedoch war die Einsetzbarkeit in Verbindung mit Isocyanaten und Aminen überraschend. Man hätte angenommen, daß Isocyanat bzw. Amin und Silan miteinander reagieren, so daß das Isocyanat zur Erzeugung des Schmelzklebers desaktiviert bzw. vernichtet wird und für die bestimmungsgemäße Schmelzkleberbildung nicht mehr zur Verfügung steht. Auch hätte man angenommen, daß Isocyanat und wasserfeuchtes Millieu, das für die Vernetzung bzw. Erzeugung der Kapselstruktur des silanisierten Polybutadiens in situ erforderlich ist, für das Isocyanat schädlich ist, indem es sofort hydrolisiert

Entsprechend der erfindungsgemäßen Lösung der Augabe war es überraschend, daß Isocyanate gegenüber dem Silan sehr reaktionsträge sind und Mikrokapseln gebildet werden können. Darüber hinaus erfolgt offenbar die Mikroverkapselung so rasch, daß eine Hydrolyse des Isocyanates vollkommen unterbunden wird und auch ein Eindringen von Feuchtigkeit in die Mikrokapsel verhindert wird, die dem Isocyanat schaden könnte.

Hergestellt werden die mikroverkapselten Isocyanate durch Mischen der Isocyanatkomponente mit dem silanisierten Polybutadien. Die Mischungstemperatur richtet sich nach den Schmelzpunkten der Komponenten und liegt in der Regel bei 100 °C bis 150 °C. Eingesetzt wird die Vernetzungskomponente mit dem silanisierten Polybutadien im Verhältnis 4:2 bis 4:1, vorzugsweise 4:1. Das Polybutadien that einen Siliciumgehalt von 2 bis 10 Gew.%, eine Molmasse von 1500 bis 2500 g/mol, eine Viskosität von 1000 bis 3000 mPas und einen Feststoffgehalt von größer 60 %. Der Mischungsvorgang läuft unter hoher Scherung ab. Dem Gemisch werden noch ca. 0,5 bis 1,5 % eines handelsüblichen Tensides (z.B. Intrasol), 0,05 bis 0,1 % einer Katalysatorsäure (z.B. Toluolsulfonsäure) und 1,5 bis 5 % eines Verdickers (z.B. Acrylsäureesterverdicker) und gegebenfalls weitere Zuschlagstoffe zugefügt.

Die erfindungsgemäße venetzbare Schmelzklebermasse für die Beschichtung und/oder Laminierung von Flächengebilden zeichnet sich dadurch aus, daß die in der Schmelzklebermasse vorhandenen reaktionsfähigen Komponenten erst in der Schmelze unter Vernetzung reagieren. Die Vernetzungskomponente wird in Form einer mikroverkapselten Polyisocyanatdispersion zur Beschichtungspaste zugegeben. In dieser bevorzugten Ausgangsform wird ein handelsübliches Copolyamid mit Aminendgruppen mit einem trimerisierten Diisocyanat, das durch Mikroverkapselung wasserunempfindlich gemacht wurde, in eine Paste eingearbeitet. Anschließend wird das zu bearbeitende Material über Rotationssiebdruck beschichtet. Anstelle des Copolyamids kann auch ein Copolyester eingesetzt werden. Bei der anschließenden Trocknung im Ofen bei ca. 120 °C wird die Vernetzung innerhalb von einigen Sekunden eingeleitet, um eine vernetzte Rückschlagsperre für den Doppelpunkt zu erhalten. Damit können die üblichen Probleme Isocyanathaltiger Systeme umgangen werden, die zum Beispiel darin bestehen, daß verkappte Isocyanate (Caprolactam oder Oxime als Verkapselungsmittel) zu hohe Aktivierungstemperaturen benötigen. Vorteilhaft ist auch, daß bei der Fixierung keine leichtsiedenden entzündbaren Lösemittel frei werden, da ja eine wäßrige Suspension vorliegt.

### Beispiel 1:

160 g einer 70 %igen Polyisocyanatlösung eines trimerisierten IPDI werden mit 40 g eines silanisierten Polybutadiens mit einem MG von 1500 bis 2500, einer Viskosität von 1000 bis 3000 mPas und einem Feststoffgehalt > 60 % miteinander vermischt. Dabei entsteht eine homogene, klare Mischung. Diese Mischung wird langsam in eine wäßrige Lösung, bestehend aus 500 g Wasser, 10 g Intrasol , 0,5 g p-Toluolsulfonsäure, 1 g Entschäumer und 30 g eines handelsüblichen wäßrigen Verdickers unter hoher Scherung mit Hilfe eines Rührwerkes, das hohe Scherkräfte erzeugt (Ultra-Thurrax), dosiert. Das kapselbildende Material verkapselt unter Hydrolysebedingungen sofort das Polyisocyanat unter Bildung einer wasserdichten Hülle, die bei bestimmungsgemäßer Verwendung durch Druck oder Hitze zerstört bzw. freigesetzt werden kann.

Die Dispersion bzw. die auf diese Weise erzeugte Druckpaste hat nun besonders vorteilhafte Eigenschaften:

Die Paste, die als Basispunkt (Rückschlagsperre) für den sogenannten Doppelpunkt gedruckt wird, vernetzt bei der Trocknung im angeschlossenen Heißluftkanal und verschmilzt mit dem aufgestreuten aminterminierten Copolyamid (Oberpunkt). Die Anbindung ist deshalb besonders gut, weil die Aminoendgruppen aus dem Oberpunkt, an der Grenzfläche zum Basispunkt, mit der Vernetzungskomponente reagieren können und dadurch ein fließender Übergang von der vernetzten Basisschicht zum thermoplastischen Oberpunkt, der die eigentliche Haftung gewährleistet, entsteht.

Um eine besonders gute Anbindung des Oberpunktes an den Basispunkt zu erreichen, empfiehlt es sich, ein amingeregeltes Copolyamid als Oberpunktmaterial einzusetzen. Geeignete Produkte für den Basis- und Oberpunkt sind niedrig viskose, niedrig schmelzende Typen. Der Schmelzpunkt sollte zwischen 90 und 150 °C, bevorzugt zwischen 115 und 130 °C betragen mit einer Lösungsviskosität im Bereich von 1,2 bis 1,7 mPas, vorzugsweise 1,25 bis 1,4 mPas. Dadurch reagiert die Grenzschicht mit der Isocyanatpaste und schafft eine sehr beständige Verbindung der beiden Punkte. Die Beschichtungsmengen für den Basispunkt sollten 2 bis 5 g/m² betragen, bevorzugt 2,5 bis 4 g/m², für den Oberpunkt je nach Anwendung 4 bis 8 g/m² besonders 5 bis 7 g/m². Der Basispunkt kann als Paste rasterförmig aufgetragen werden.

Innenblockierte Polyisocyanate (z.B. dimerisiertes Polyisocyanat) können auch ohne Verkapselung in Paste verarbeitet werden, weil sie nicht anfällig gegen Wasser sind. Der Einsatz solcher Systeme beschränkt sich jedoch auf einen Temperaturbereich oberhalb von 150 ° C zum Beispiel für Hemdkragen, weil die eingesetzten Textilien meist Baumwolle, höhere Temperaturen vertragen. Als Schmelzkleber eignet sich für solch eine Pastenrezeptur VESTAMELT X 1316-P 1 ( DEGUSSA-HÜLS).

### Beispiel 2

Ein aminoterminiertes Copolyamid der Degussa-Hüls AG (VESTAMELT X 1027-P1) und eine auf die oben beschriebene Art hergestellte verkapselte Polyisocyanat-Dispersion wurden mit gängigen Dispergatoren und Verdickern, z.B. Intrasol 12/18/5 und Mirox TX, der Fa. Stockhausen, wie in DE-B 20 07 971, DE-B 22 29 308, DE-B 24 07 505 und DE-B 25 07 504 beschrieben, zu einer druckbaren Paste verarbeitet und mit einer Rotationssiebdruckanlage mit einer CP 66 Schablone auf ein 35 g Polyestergewirk mit Hochbauschgarn gedruckt. Der Auftrag betrug 2 g/m² Auf den noch nassen Pastenpunkt wurde VESTAMELT X 1027-P816 aufgestreut, der Überschuß abgesaugt und im Trockenofen bei 130 °C getrocknet und angesintert. Der Oberpunkt hatte eine Auflage von 5 g/m², so daß das Gesamtgewicht 7 g/m² betrug.

| Pastenrezeptur des Basispunktes: | |
|---|---|
| 1 500 g | Wasser |
| 35 g | Mirox TX (Polyacrylsäurederivat) |
| 40 g | Intrasol 12/18/5 (ethoxlierter Fettalkohol) |
| 200 g | Polyisocyanat-Dispersion (ca. 5 % trimerisiertes IPDI) aus Beispiel 1 |
| 600 g | VESTAMELT X 1027-P1 |

Als Streumaterial wurde das aminterminierte VESTAMELT X 1027-P816 der DEGUSSA-HÜLS AG aufgestreut.

### Ergebnis:

Ein 5 cm breiter Streifen dieser Einlage wurde gegen einen silikonisierten Blusenstoff aus einer Baumwoll-Polyestermischung bei einer Fugentemperatur von 127 °C, 10 s und einem Lineardruck von 4 N fixiert anschließend wurde der Verbund einer 60 °C-Wäsche unterzogen.

| | |
|---|---|
| Primärhaftung | 16 N/ 5 cm |
| 60°C-Wäsche | 14 N/ 5 cm |
| Rückvernietung | 0,1 N/ 10 cm |

### Zum Beispiel II: Vergleich zum Stand der Technik

Auf der gleichen Einlagenbasis wurde ein Pastensystem auf Basis Copolyamid Polyethylen appliziert und mit dem gleichen Oberpunktmaterial bestreut, getrocknet und gesintert. Es wurden die gleichen Mengen an Basispunkt und Oberpunkt aufgetragen.

| Pastenrezeptur: | |
|---|---|
| 1 500 g | Wasser |
| 35 g | Mirox TX |
| 40 g | Intrasol 12/18/5 |
| 400 g | SCHAETTIFIX 1820 (ND-Polyethylen) |
| 200 g | VESTAMELT 751-PI |

Das SCHAETTIFIX 1820 ist ein Niederdruck-Polyethylen mit einem Schmelzpunkt von 128 bis 130 °C und einem MFR
Wert von 20 g/10 min.

### Ergebnis:

| | |
|---|---|
| Primärhaftung | 9 N/ 5 cm |
| 60 °C-Wäsche | 5 N/ 5 cm |
| Rückvernietung | 0,9 N/ 10cm |

Der Vorteil des erfindungsgemäßen Verfahrens ist, daß schon bei den Trockenbedingungen der Unterpunkt vernetzt und noch während des Aufschmelzens der Oberpunkt aufgrund seiner Terminierung mit dem Unterpunkt vernetzt und dadurch eine optimale Anbindung erhält. Da nach der Beschichtung der Unterpunkt stark im Molekulargewicht aufgebaut ist, kann er nicht mehr in das Gewirk absinken. Bei der anschließenden Fixierung wird das niedrigviskose Polyamid des Oberpunktes gezwungen, gegen den zu fixierenden Oberstoff zu fließen, da er nicht nach unten wegfließen kann, dadurch werden schon mit kleinsten Schmelzklebermengen sehr hohe Haftungen erzielt. Die Trennschicht zwischen Oberpunkt und Basispunkt, die bisher die Schwäche des Systems war, besonders bei Wäsche, kann nicht so stark hydrolytisch angegriffen werden wie bei bisher bekannten Systemen und zeigt deshalb wesentlich höhere Beständigkeiten.

### Eingesetzte Produkte:

VESTAMELT X 1027-P1 ist ein ternäres Copolyamid der DEGUSSA-HÜLS AG auf Basis LL, CL und DDS/MPD mit Aminoendgruppen, Schmelzpunkt 120 °C Aminoendgruppen 100 bis 400 mVal/kg, bevorzugt 250 bis 350 mVal/kg.

Das trimerisierte Isocyanat ist ein Polyisocyanat mit einer Funktionalität von 3 bis 4, der Schmelzpunkt liegt bei 100 bis 115 °C. Es ist ein Produkt der DEGUSSA-HÜLS AG.

### Vergleichbeispiel 3:

| | |
|---|---|
| 1 500 g | Wasser |
| 35g | Mirox TX |
| 40g | Intrasol 12/18/5 |
| 400 g | VESTAMELT X 1316-P 1 |
| 200 g | VESTAMELT X 1310-P 1 |

### Ergebnis:

Ein 5 cm breiter Streifen dieser Einlage (75 g/m² Baumwolle) mit einem Raster CP 66 und einem Auftrag von 16 g/m², wurde gegen einen silikonisierten Blusenstoff aus einer Baumwoll- Polyestermischung bei einer Fugentemperatur von 155 °C, 16 s und einem Lineardruck von 4 kg/cm² auf einer Hemdenpresse, fixiert, anschließend wurde der Verbund einer 60 °C-Wäsche unterzogen.

| | |
|---|---|
| Haftung | 21 N/ 5 cm |
| 60 °C-Wäsche | 19 N/ 5 cm |

### Versuch 3a: Vergleich zum Stand der Technik

Auf die gleiche Einlage, wie in Versuch 3, wurden 16g/m² einer gängigen Beschichtung, nach folgender Rezeptur, aufgetragen:

| | |
|---|---|
| 1 500 g | Wasser |
| 35 g | Mirox TX |
| 40 g | Intrasol 12/18/5 |
| 600 g | VESTAMELT 250-P 1 |

Unter den gleichen Fixierbedingungen ergaben sich folgende Haftungen:

| | |
|---|---|
| Primärhaftung | 16 N/ 5 cm |
| 60°C-Wäsche | 10 N/ 5cm |

### Ergebnis:

Durch die Vernetzung (Molekulargewichtsaufbau) wird die Hydrolysebeständigkeit stark erhöht, was sich in den Waschbeständigkeiten deutlich bemerkbar macht. Durch den gleitenden Molekulargewichtsaufbau, während der Fixierung, wird die Rückschlagneigung stark verringert, dadurch erhöht sich die Haftung.

## Patentansprüche

1. Verfahren zur Herstellung einer vernetzbaren Schmelzklebermasse für die Beschichtung und/oder Laminierung von Flächengebilden,
**dadurch gekennzeichnet,**
**daß** die Vernetzungskomponente durch ein silanisiertes Polybutadien mit einem Siliciumgehalt von 2 bis 10 Gew.-%, einer Molmasse von 1500 bis 2500 g/mol und einer Viskosität von 1000 bis 3000 mPas mikroverkapselt wird und die reaktionsfähigen Komponenten erst in der Schmelze unter Vernetzung reagieren.

2. Verfahren zur Herstellung einer Schmelzklebermasse nach Anspruch 1,
**dadurch gekennzeichnet,**
**daß** die Vernetzungskomponente mit einem silanisierten Polybutadien im Verhältnis 4:1 Gew.-% mikroverkapselt wird.

3. Verfahren zur Herstellung einer Schmelzklebermasse nach einem der vorherigen Ansprüche,
**dadurch gekennzeichnet,**
**daß** die Vernetzungskomponente aus der Gruppe der Isocyanate stammt und mehr als zwei reaktive Gruppen pro Molekül hat.

4. Verfahren zur Herstellung einer Schmelzklebermasse nach einem der vorherigen Ansprüche,
**dadurch gekennzeichnet,**
**daß** das Isocyanat einen Schmelzbereich von 110 bis 130 °C aufweist.

5. Verfahren zur Herstellung einer Schmelzklebermasse nach einem der vorherigen Ansprüche,
**dadurch gekennzeichnet,**
**daß** als Vernetzungskomponente ein Isocyanat mit einem silanisierten Polybutadien mikroverkapselt wird und mit einer zweiten Komponente, die ein Copolyamid oder Copolyester ist, reagiert.

6. Verfahren zur Herstellung einer Schmelzklebermasse nach einem der vorherigen Ansprüche,
**dadurch gekennzeichnet,**
**daß** die zweite Komponente ein amingeregeltes Copolyamid mit einem Schmelzbereich von 90 bis 150 °C und einer Lösungsviskosität eta rel im Bereich von 1,2 bis 1,7 ist.

7. Verfahren zur Herstellung einer Schmelzklebermasse nach einem der vorherigen Ansprüche,
**dadurch gekennzeichnet,**
**daß** die zweite Komponente ein OH-Gruppen terminierter Copolyester auf Basis Terephthalsäure, Isophthalsäure und Butandiol oder Butandiol in Kombination mit kleinen Mengen bis 12 Mol% anderer Diole, mit Schmelzpunkten von 100 bis 150 °C, ist

8. Verfahren zur Herstellung einer Schmelzklebermasse nach einem der vorherigen Ansprüche,
**dadurch gekennzeichnet,**
**daß** das mikroverkapselte Polyisocyanat in einer wäßrigen Paste dispergiert ist und durch Rotationssiebdruck auf ein Flächengebilde appliziert wird.

9. Verfahren zur Herstellung einer Schmelzklebermasse nach einem der vorherigen Ansprüche,
**dadurch gekennzeichnet,**
**daß** das reaktive Gemisch als Basispunkt für die Doppelpunkttechnologie als Durchschlagsperre eingesetzt wird.

10. Verfahren zur Herstellung einer Schmelzklebermasse nach einem der vorherigen Ansprüche,
**dadurch gekennzeichnet,**
**daß** der Oberpunkt aus einem amingeregelten Copolyamid besteht.

## Claims

1. A process for preparing a crosslinkable hotmelt adhesive composition for the coating and/or lamination of sheetlike structures, **characterized in that** the crosslinking component is microencapsulated by a silanized polybutadiene having a silicon content of from 2 to 10% by weight, a molar mass of from 1500 to 2500 g/mol and a viscosity of from 1000 to 3000 mPas, and the reactive components do not react, with crosslinking, until in the melt.

2. A process for preparing a hotmelt adhesive composition according to claim 1, **characterized in that** the crosslinking component is microencapsulated with a silanized polybutadiene in a ratio of 4:1 by weight.

3. A process for preparing a hotmelt adhesive composition according to either one of the previous claims, **characterized in that** the crosslinking component comes from the group of the isocyanates and has more than two reactive groups per molecule.

4. A process for preparing a hotmelt adhesive composition according to claim 3, **characterized in that** the isocyanate has a melting range of from 110 to 130°C.

5. A process for preparing a hotmelt adhesive compositon according to claim 3 or 4, **characterized in that** an isocyanate is microencapsulated as crosslinking component with a silanized polybutadiene and reacts with a second component which is a copolyamide or copolyester.

6. A process for preparing a hotmelt adhesive composition according to claim 5, **characterized in that** the second component is an amine-regulated copolyamide having a melting range of from 90 to 150°C and a solution viscosity (eta rel) in the range from 1.2 to 1.7.

7. A process for preparing a hotmelt adhesive composition according to claim 5, **characterized in that** the second component is an OH-terminated copolyester based on terephthalic acid or isophthalic acid and butanediol or butanediol in combination with small amounts of up to 12 mol% of other diols, with melting points of from 100 to 150°C.

8. A process for preparing a hotmelt adhesive composition according to any one of previous claims 3 to 7, **characterized in that** the microencapsulated polyiscyanate is present dispersed in an aqueous paste and is applied to a sheetlike structure by rotary screen printing.

9. A process for preparing a hotmelt adhesive composition according to any one of the previous claims, **characterized in that** the reactive mixture is employed as base dot for the double dot technology, as a strikethrough barrier.

10. A process for preparing a hotmelt adhesive composition according to claim 9, **characterized in that** the upper dot consists of an amine-regulated copolyamide.

## Revendications

1. Procédé de préparation d'une masse de colle par fusion, réticulable, pour le revêtement et/ou la stratification de structures de surfaces,
**caractérisé en ce que**
le composant de réticulation est micro-encapsulé par un polybutadiène silanisé ayant une teneur en silicium de 2 à 10 % en poids, une masse molaire de 1500 à 2500 g/mol et une viscosité de 1000 à 3000 mPas, et les composants aptes à réagir réagissent d'abord à l'état fondu en se réticulant.

2. Procédé de préparation d'une masse de colle par fusion selon la revendication 1,
**caractérisé en ce que**
le composant de réticulation est micro-encapsulé avec un polybutadiène silanisé dans le rapport 4 :1 % en poids.

3. Procédé de préparation d'une masse de colle par fusion selon l'une des revendications précédentes,
**caractérisé en ce que**
le composant de réticulation provient du groupe des isocyanates et possède plus de deux groupes réactifs par molécule.

4. Procédé de préparation d'une masse de colle par fusion selon l'une des revendications précédentes,
**caractérisé en ce que**
l'isocyanate possède une plage de fusion allant de 110 à 130°C.

5. Procédé de préparation d'une masse de colle par fusion selon l'une des revendications précédentes,
**caractérisé en ce que**
comme composant de réticulation on micro-encapsule un isocyanate avec un polybutadiène silanisé et on fait réagir avec un deuxième composant qui est un copolyamide ou un copolyester.

6. Procédé de préparation d'une masse de colle par fusion selon l'une des revendications précédentes,
**caractérisé en ce que**
le deuxième composant est un copolyamide contrôlé par une amine, ayant une plage de fusion de 90 à 150°C, et une viscosité à la fusion eta relative dans la zone de 1,2 à 1,7.

7. Procédé de préparation d'une masse de colle par fusion selon l'une des revendications précédentes,
**caractérisé en ce que**
le deuxième composant est un copolyester terminé par des groupes OH, à base d'acide térephtalique, d'acide isophtalique, et de butane diol ou de butane diol en combinaison avec de petites quantités allant jusqu'à 12 % molaire d'autres diols ayant des points de fusion de 100 à 150°C.

8. Procédé de préparation d'une masse de colle par fusion selon l'une des revendications précédentes,
**caractérisé en ce que**
le polyisocyanate micro-encapsulé est dispersé en une pâte aqueuse, et est appliqué par sérigraphie en rotation sur une structure de surface.

9. Procédé de préparation d'une masse de colle par fusion selon l'une des revendications précédentes,
**caractérisé en ce que**
le mélange réactionnel est utilisé comme point de base pour la technologie de point double en tant que barrière au percement.

10. Procédé de préparation d'une masse de colle par fusion selon l'une des revendications précédentes,
**caractérisé en ce que**
le point supérieur consiste en un copolyamide contrôlé par une amine.
